# EUROPEAN PATENT SPECIFICATION

(11) **EP 1 528 802 B1**
(45) Date of publication and mention of the grant of the patent: **23.02.2011**
(21) Application number: 04300544.6
(22) Date of filing: 17.08.2004
(51) Int. Cl.: H04N 5/72, H04N 5/64, H04N 5/65

(54) **Display apparatus with shielding**
Anzeigegerät mit Abschirmung
Appareil d'affichage avec blindage

(30) Priority: 29.10.2003 EP 03300182
(43) Date of publication of application: 04.05.2005
(73) Proprietor: Thomson Licensing, 92130 Issy-les-Moulineaux (FR)
(72) Inventor: Allaire, Christian Yves, 49800, La Daguenière (FR); Delande, Laurent, 49610, St Mélaine / Aubance (FR); Restif, Roger, 49170, St Leger des bois (FR); Ros, André, 49000, Angers (FR)
(74) Representative: Rossmanith, Manfred

(56) References cited:
- EP-A- 0 331 349
- EP-A- 0 385 037
- US-A- 5 543 863
- US-B1- 6 268 960

## Description

The invention is related to a display apparatus comprising a display device mounted in a housing and having a face plate. The surface of the face plate of a current display apparatus is usually provided with coatings to reduce reflexions and to harden its surface against scratches or other mechanical disturbances. For projection displays the face plate additionally also includes optical elements to achieve the desired image quality.

It is known in the art e.g. from JP 2000-182519 to provide a display with a protective and/or decorative screen shield to protect the screen against scratches, contamination and any other environmental influences being detrimental to the picture quality. The screen shield can also be tinted to improve the contrast of the picture especially in the presence of bright daylight. In order to maintain a superior surface quality or to adapt the tint of the protective screen it is desirable to arrange the protective shield on the display in a detachable manner. This enables the user to replace the currently used protective screen by a new one or by one having a different tint.

In US 6,268,960 a display device is disclosed. A filter assembly is mounted in various ways in front of the display. Basically, the filter assembly is fixed by the engagement of latches into corresponding openings.

EP-A 0 385 037 describes an improved filter screen device for cathode ray tubes (CRT).
The device is provided with hangers fitted in the frame. Each hanger includes a hanger bar which extends beyond frame member and is pivotally connected through pin to a CRT mounting bar.

US-A 5,543,863 discloses an eye protecting mask for a computer and video display. The eye protecting mask is pivotally fastened in front of the display screen. An adjustment device is disposed at the top side of the television screen or the computer video display for holding a frame of the eye protecting mask. The adjustment device comprises a base and a pivoting member. The frame can be pivoted in front of the screen or upwards outside of the direct viewing direction.

In EP-A 0 331 349 a protective screen for a visual display device is shown. The protective screen is articulated around a pivotal connection between an upper plate fixed to the housing of the display device and the protective screen.

Still, there remains a desire to provide a display apparatus equipped with a shielding which is easily mountable and unmountable. In addition, it is preferable if the aesthetic impression of the display apparatus is not impaired.

The invention suggests a display apparatus as defined in claim 1 to respond to these needs.

The inventive videodisplay apparatus comprises a display device mounted in a housing and having a face plate. A shielding is mounted in front of the face plate in a detachable manner allowing an easy replacement or exchange of the shielding. In an advantageous embodiment of the invention the shielding is transparent. It is convenient if means for detaching the shielding are provided. In a particular embodiment of the invention the means for detaching comprise a rotatable cam. In addition, the means for detaching may comprise a base plate bearing the rotatable cam. A lever may be drivingly connected to the rotatable cam for rotating the cam. With regard to the appearance of the apparatus it is advantageous to accommodate the lever in a recess adjacent to the shielding. Preferably, the lever forms an even surface relative to a front side of the shielding or relative to a front side of the face plate.

In another embodiment of the invention the means for detaching comprise a base plate bearing the rotatable cam. The base plate may comprise a locking element locking the cam in the base plate. It is advantageous if the base plate is attached to the shielding.

In a preferred embodiment the base plate is provided with a first indexing element and the face plate with a complementary second indexing element to locate the shielding on the face plate.

An additional advantage of all embodiments of the present invention is that children cannot easily detach the shielding and thus protecting the children against any kind of injuries that may be caused if the shielding is no longer fixed on the face plate. E.g. a detached shielding could drop on a foot of a child and hurt it.

In the drawing an exemplary embodiment of the invention is illustrated. It shows:
Fig. 1 a front view of the inventive display apparatus including a protective screen;
Fig. 2 a rear view of the protective screen of Fig. 1 including exstractor mechanisms, and
Fig. 3a, and 3b details of the exstractor mechanism shown in Fig. 2.

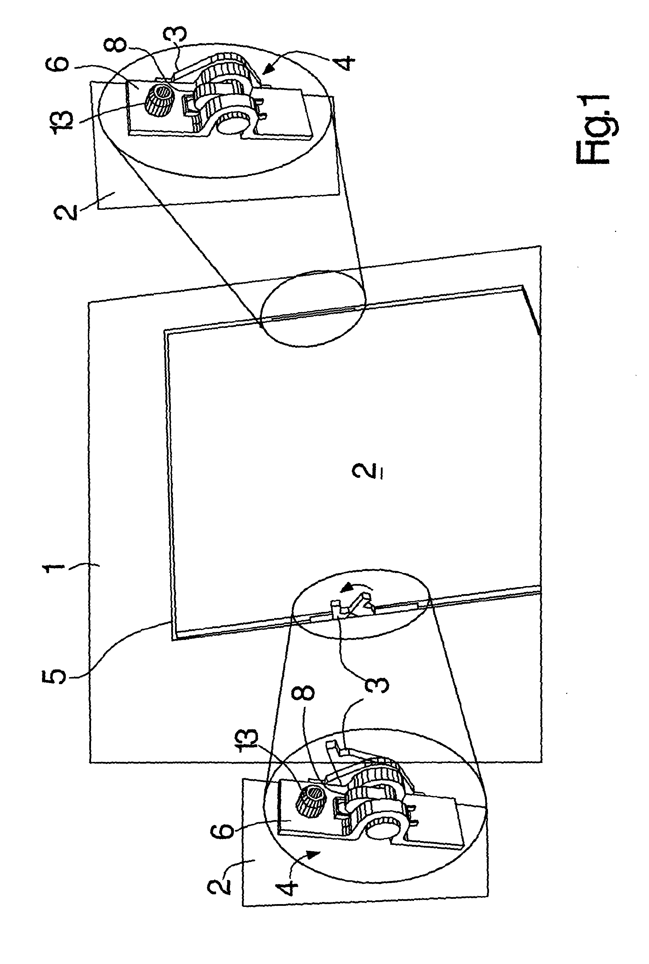

Fig. 1 shows a schematic illustration of the front view of an exemplary embodiment of the inventive video display apparatus. For the sake of simplicity the invention will be described in the following in connection with a television receiver. However, the invention is not limited to television receivers but can be incorporated in any kind of display apparatus like for example computer monitors.

Fig. 1 exhibits the front view of a face plate or front panel 1 of a television cabinet the reminder of which is not shown in the drawing. The cabinet houses the receiver and a display device like a cathode raytube (CRT), an LCD panel (liquid crystal panel), a plasma panel or the screen of a rear projector. The face plate 1 is provided with a cut-out window 5 or recess in its center portion accommodating a protective screen shield or shielding 2 in front of a face plate of the display device. The dimensions of the window 5 and the shielding are adapted to provide a flat surface across the face plate 1 and the shielding 2 as shown in Fig. 1. The flat surface makes it very difficult to remove the shielding from the recess in the face plate. Therefore, rotatable levers 3 are provided on the lateral sides of the shielding 2. When the shielding 2 is mounted, the levers 3 are aligned with the surface defined by the shielding 2 and face plate 1 as it is shown on the right side of Fig. 1. The visibility of the levers is therefore limited which is very favourable for some designs. The levers 3 are rotatable around a horizontal axis by pushing one lever arm with a finger tip to make the opposite lever arm raise above the surface of the face plate as it is illustrated in the enlarged portion on the left side of Fig. 1.

It is noted that the enlarged partial views in Fig. 1 show the respective sections of the shielding 2 from the rear.

Each lever arm 3 forms part of an extractor mechanism 4 and is effective to operate the extractor mechanism which is shown in greater detail from the rear side of the face plate and on a different scale on the left and on the right side of the face plate 1 in Fig. 1. The structure and functionality of the extractor mechanism 4 will be described in further detail below.

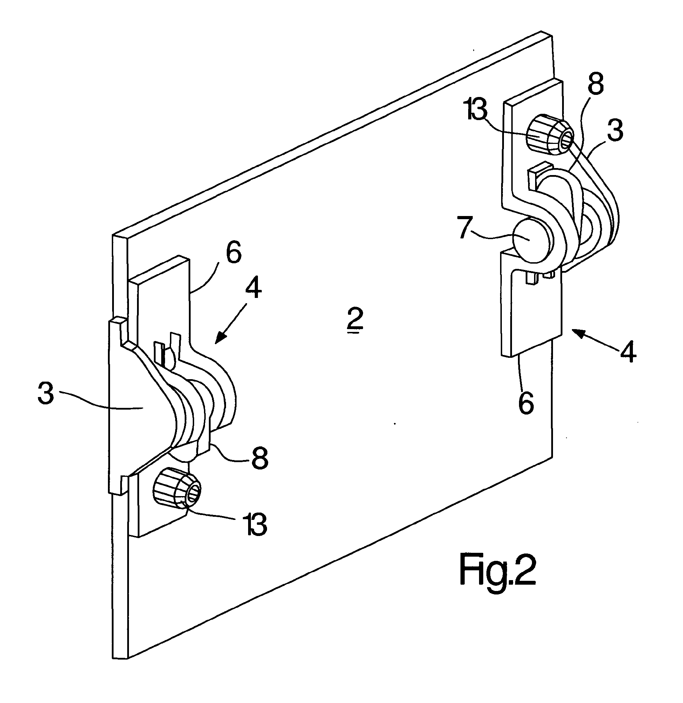

Fig. 2 illustrates the shielding 2 in the mounted position from the rear side without showing the face plate 1. In the mounted position the levers 3 are aligned with a surface of the shield 2 as it has been described with reference to Fig. 1. The extractor mechanism 4 includes a base plate 6 which is securely connected with a rear side of shield 2 e.g. by a moulding connection or by glueing. The lever 3 is arranged on a rotatable shaft 7 carrying a cam 8.

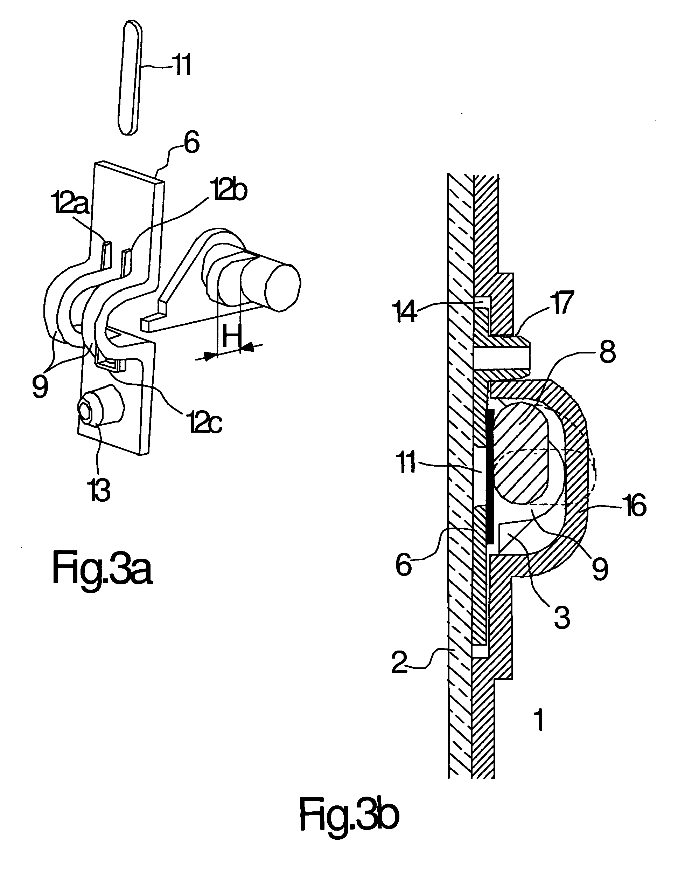

Fig. 3a displays an exploded perspective view of the extractor mechanism 4. The lever 3 is securely fixed on the shaft 7 carrying the cam 8 having a height H. For the assembly of the extractor mechanism 4 the shaft 7 is inserted under two bow 9 being part of the base plate 6. Subsequently, a locking plate 11 is inserted between the bows 9 and between the shaft 7 and the base plate 6 to form a bearing in which a shaft 7 is rotatably mounted. During the insertion the locking plate 11 is guided by a ridge having two lateral sides 12a, 12b and a front side 12c. The front side 12c is an effective abutment for the insertion of the locking plate 11. An index protrusion 13 forms part of the base plate 6.

Fig. 3b shows a sectional side view of the assembled extractor mechanism 4 mounted on the shielding 2 which itself is in the mounted position on the face plate 1. In the face plate 1 a recess 14 is provided to accommodate the base plate 6 of the extractor mechanism 4. An arcuate portion 16 of the face plate 1 covers the cam 8 and the bow 9 of the base plate 6 in close vicinity. Adjacent to the arcuate portion 16 the face plate is provided with an index aperture 17. The cooperation of the index protrusions 13 with the associated index apertures 17 secures the proper positioning of the shielding 2 on the face plate 1.

For the extraction of the shielding 2 a user turns the lever 3 and thus the cam 8 clockwise in Fig. 3b. In consequence the periphery of the cam 8 contacts the arcuate portion 16 and generates a force directed to the left side in Fig. 3b. The force urges the shielding 2 out of the recess 14 and out of the window 5 in face plate 1. Now the user can easily grasp the rim of the shielding 2 to completely remove it from the face plate 1.

For the mounting of a new shielding 2 the levers are arranged parallel to the surface of the shielding 2. Then the index protrusions 13 are aligned with the index apertures 17 and the shielding 2 is pushed into the window 5. The proper positioning of the shielding 2 is facilitated by the conical shape of the end portion of the index protrusion 13 tolerating small deviations from the exact position at the beginning of the insertion of the shielding 2.

It is noted that the present invention is not limited to embodiments, in which the face plate is located on the front side of the apparatus and the shielding 2 is not necessarily a protective screen shield.

## Claims

1. Videodisplay apparatus comprising a display device mounted in a housing and having a face plate (1) and a detachable shielding (2) mounted in front of the face plate (1), wherein means (4) for detaching the shielding (2) are provided, **characterized in that** that the means (4) for detaching comprise a rotatable cam (8), and
that the cam (8) is in mechanical contact with the face plate (1) such that rotating the cam creates a force separating the shielding (2) from the face plate (1).

2. Videodisplay apparatus according to claim 1, **characterized in that** the shielding (2) is transparent.

3. Videodisplay apparatus according to claim 1, **characterized in that** a lever (3) is drivingly connected to the rotatable cam (8) for rotating the cam.

4. Videodisplay apparatus according to claim 3, **characterized in that** the lever (3) is accommodated in a recess adjacent to the shielding (2).

5. Videodisplay apparatus according to claim 4, **characterized in that** the lever (3) forms an even surface relative to a front side of the shielding (2).

6. Videodisplay apparatus according to claim 4, **characterized in that** the lever (3) forms an even surface relative to a front side of the face plate (1).

7. videodisplay apparatus according to claim 1, **characterized in that** the means (4) for detaching comprise a base plate (6) bearing the rotatable cam (8).

8. Videodisplay apparatus according to claim 7, **characterized in that** the base plate (6) comprises a locking element (11) locking the cam (8) in the base plate (6).

9. Videodisplay apparatus according to claim 7, **characterized in that** the base plate (6) is attached on the shielding (2).

10. Video display apparatus according to claim 7, **characterized in that** the base plate (6) is provided with a first indexing element (13) and the face plate (1) with a complementary second indexing element (17) to locate the shielding on the face plate (1).

## Patentansprüche

1. Videoanzeigegerät, das eine Anzeigevorrichtung umfasst, die in ein Gehäuse eingebaut ist und eine Frontabdeckung (1) und eine vor der Frontabdeckung (1) eingebaute lösbare Abschirmung (2) aufweist, wobei Mittel (4) zum Lösen der Abschirmung (2) vorgesehen sind, **dadurch gekennzeichnet, dass** die Mittel (4) zum Lösen einen drehbaren Nocken (8) umfassen, und
dass der Nocken (8) in mechanischem Kontakt mit der Frontabdeckung (1) steht, sodass Drehen des Nockens eine Kraft erzeugt, die die Abschirmung (2) von der Frontabdeckung (1) trennt.

2. Videoanzeigegerät nach Anspruch 1,
**dadurch gekennzeichnet, dass** die Abschirmung (2) durchsichtig ist.

3. Videoanzeigegerät nach Anspruch 1,
**dadurch gekennzeichnet, dass** mit dem drehbaren Nocken (8) ein Hebel (3) zum Drehen des Nockens antriebsmäßig verbunden ist.

4. Videoanzeigegerät nach Anspruch 3,
**dadurch gekennzeichnet, dass** der Hebel (3) in einer an die Abschirmung (2) angrenzenden Aussparung untergebracht ist.

5. Videoanzeigegerät nach Anspruch 4,
**dadurch gekennzeichnet, dass** der Hebel (3) in Bezug auf eine Vorderseite der Abschirmung (2) eine ebene Oberfläche bildet.

6. Videoanzeigegerät nach Anspruch 4,
**dadurch gekennzeichnet, dass** der Hebel (3) in Bezug auf eine Vorderseite der Frontabdeckung (1) eine ebene Oberfläche bildet.

7. videoanzeigegerät nach Anspruch 1,
**dadurch gekennzeichnet, dass** die Mittel (4) zum Lösen eine Grundplatte (6) umfassen, die den drehbaren Nocken (8) trägt.

8. Videoanzeigegerät nach Anspruch 7,
**dadurch gekennzeichnet, dass** die Grundplatte (6) ein verriegelungselement (11) umfasst, das den Nocken (8) in der Grundplatte (6) verriegelt.

9. Videoanzeigegerät nach Anspruch 7,
**dadurch gekennzeichnet, dass** die Grundplatte (6) auf der Abschirmung (2) befestigt ist.

10. Videoanzeigegerät nach Anspruch 7,
**dadurch gekennzeichnet, dass** die Grundplatte (6) mit einem ersten Indexelement (13) versehen ist und die Frontabdeckung (1) mit einem komplementären zweiten Indexelement (17) versehen ist, um die Abschirmung auf der Frontabdeckung (1) zu positionieren.

## Revendications

1. Appareil d'affichage vidéo comprenant un dispositif d'affichage monté dans un logement et possédant une plaque frontale (1) et un blindage amovible (2) monté devant la plaque frontale (1), où un moyen (4) de détachement du blindage (2) est fourni, **caractérisé en ce que** le moyen (4) de détachement comprend une came rotative (8), et
la came (8) est en contact mécanique avec la plaque frontale (1) de telle manière que la rotation de la came crée une force séparant le blindage (2) de la plaque frontale (1).

2. Appareil d'affichage vidéo selon la revendication 1, **caractérisé en ce que** le blindage (2) est transparent.

3. Appareil d'affichage vidéo selon la revendication 1, **caractérisé en ce qu'**un levier (3) est connecté par entraînement à la came rotative (8) pour faire pivoter la came.

4. Appareil d'affichage vidéo selon la revendication 3, **caractérisé en ce que** le levier (3) se situe dans un renfoncement adjacent au blindage (2).

5. Appareil d'affichage vidéo selon la revendication 4, **caractérisé en ce que** le levier (3) forme une surface régulière par rapport à un côté avant du blindage (2).

6. Appareil d'affichage vidéo selon la revendication 4, **caractérisé en ce que** le levier (3) forme une surface régulière par rapport à un côté avant de la plaque frontale (1).

7. Appareil d'affichage vidéo selon la revendication 1, **caractérisé en ce que** le moyen (4) de détachement comprend une plaque de base (6) supportant la came rotative (8).

8. Appareil d'affichage vidéo selon la revendication 7, **caractérisé en ce que** la plaque de base (6) comprend un élément de blocage (11) bloquant la came (8) dans la plaque de base (6).

9. Appareil d'affichage vidéo selon la revendication 7, **caractérisé en ce que** la plaque de base (6) est fixée sur le blindage (2).

10. Appareil d'affichage vidéo selon la revendication 7, **caractérisé en ce que** la plaque de base (6) est fournie avec un premier élément d'indexage (13) et la plaque frontale (1) avec un deuxième élément d'indexage complémentaire (17) pour localiser le blindage sur la plaque frontale (1).
